# EUROPEAN PATENT SPECIFICATION

(11) **EP 1 733 807 B1**
(45) Date of publication and mention of the grant of the patent: **18.08.2010**
(21) Application number: 06115514.9
(22) Date of filing: 15.06.2006
(51) Int. Cl.: B07B 13/08, B07B 13/16, B65G 47/96, G01G 15/00

(54) **Modular device for supporting agricultural products on grading machines or the like**
Vorrichtung für das Stützen von Agrarerzeugnissen in Sortiermaschinen und dergleichen
Dispositif modulaire pour supporter des produits agricoles dans une machine de tri ou équivalent

(30) Priority: 17.06.2005 IT MO20050154
(43) Date of publication of application: 20.12.2006
(73) Proprietor: Montanari, Riziero, 47020 Gattolino di Cesena FC (IT); Bastoni, Danilo, 47030 Gatteo FC (IT)
(72) Inventor: Montanari, Riziero, 47020 Gattolino di Cesena FC (IT); Bastoni, Danilo, 47030 Gatteo FC (IT)
(74) Representative: Modiano, Micaela Nadia

(56) References cited:
- EP-A1- 0 273 313
- EP-A1- 0 540 126
- US-A- 3 545 614

## Description

The present invention relates to a modular device for supporting agricultural products on grading machines or the like.

It is known that grading machines are apparatuses designed to sort agricultural products, such as fruit and vegetables.

These machines are provided with means for the advancement of the agricultural products along a control and measurement line, which is provided with suitable sensors for weighing, sizing, color detection, identification of any surface defects or other types of quality and quantity control for the products that allows to select and separate them according to predetermined selection criteria.

In general, the advancement means are constituted by a metal chain, which is wound around two or more motorized cylinders and along which a plurality of modular devices for supporting the agricultural products are fitted in succession.

Modular devices of the known type are provided with a plate for coupling to the chain, with which a horizontal roller is associated which is perpendicular to the chain and can rotate about its own axis.

During operations for visual assessment of the agricultural products, each product rests on the rollers of two adjacent modular devices, so that the actuated rotation of the rollers allows the rotation of the product and the inspection of substantially all of its surface.

Depending on the type of agricultural product to be graded, modular devices must have rollers having different diametrical dimensions.

In order to perform the weighing operations, traditional modular devices are provided with a small tray, which by passing in the space between one roller and the adjacent one can be lifted and lowered so as to carry or not the weight of the agricultural product.

Lifting and lowering of the tray are achieved by means of a vertical rod, which supports the tray at the top and is associated, at its lower portion, with the coupling plate by means of an articulated-parallelogram mechanism, in which the hinge pivots are all parallel to the axis of the roller; such mechanism allows the rod to perform a translational motion substantially in a vertical direction.

The system for weighing agricultural products further provides a cam-like guide, which is associated with one or more load cells and is arranged along the advancement route of the modular devices so as to affect the path of the vertical rods.

In use, in practice, a portion of the rods, often provided with a small wheel, is made to slide on the cam-like guide, causing the lifting of the rod and of the tray that it supports.

The measurement detected by the load cells therefore corresponds to the weight of the rod that slides on the cam-like guide, of the tray associated with the rod, and of the agricultural product that rests on the tray; the weight of the agricultural product alone can be determined easily from this measurement.

Further, each modular device is provided with means for tipping the tray, which allow it to overturn once it has been lifted, so as to make the agricultural product fall onto appropriate collection lines.

At the end of the measurement and control line there are in fact several ascending ramps, which can be engaged selectively by the wheel fitted on the vertical rod of the modular devices, which allow to lift the trays in a manner similar to the cam-like guide provided for the weighing operation.

Moreover, the trays are mounted on the underlying rods so that they can rotate and are provided with a tab which can engage slidingly an external fixed cam, which is arranged at the ascending ramps and guides the tipping of the trays.

These conventional modular devices are not free from drawbacks, including the fact that the tipping means with which they are provided are not particularly practical and functional, since in order to operate they require fixed cams mounted proximate to the ascending ramps,

Moreover, it is noted that for each type of agricultural product to be graded the modular devices must have rollers having different diametrical dimensions and likewise different formats of the articulated-parallelogram mechanism, in view of the fact that the vertical rod must be kept at a different distance with respect to the coupling plate; all this entails considerable expenditures in terms not only of production costs but also of management of the spare parts for the modular devices to be repaired.

EP-A1-0 540 126 discloses an apparatus for sorting spherical products according to weight, that comprises a combination of features as set forth in the pre-characterizing portion of the appended claim 1.

US-A-3 545 614 discloses a weight grading machine having a tray support that tilts by gravity to dump a product after a scale pin leaves a track portion.

The aim of the present invention is to eliminate the above-mentioned drawbacks of the background art, by providing a modular device for supporting agricultural products on grading machines or the like which is particularly functional in use and allows to simplify the architecture of the grading machines on which it is fitted.

Within this aim, an object of the present invention is to allow its assembly easily and rapidly, at the same time requiring lower production and maintenance costs than traditional modular devices.

Another object of the present invention is to provide a modular device that is simple, relatively easy to provide in practice, safe in use, effective in operation, and has a relatively low cost.

This aim and these and other objects that will become better apparent hereinafter are achieved by the present modular device for supporting agricultural products on grading machines or the like, as defined in the appended claims.

Further characteristics and advantages of the present invention will become better apparent from the following detailed description of some preferred but not exclusive embodiments of a modular device for supporting agricultural products on grading machines or the like, illustrated by way of non-limiting example in the accompanying drawings, wherein:

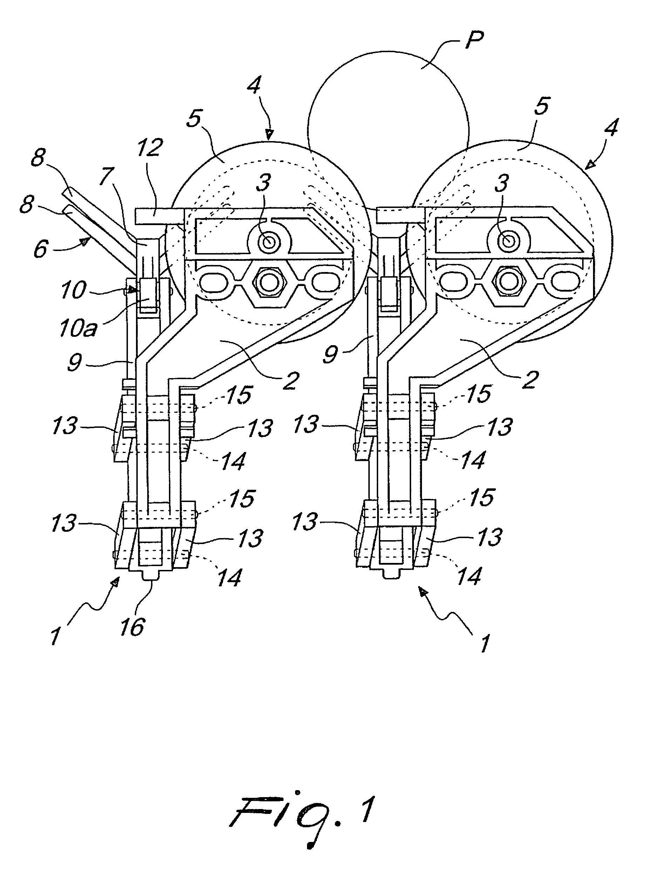

Figure 1 is a side view of some modular devices according to a first embodiment of the present invention, fitted in succession on a grading machine, the trays of which are arranged in the inactive configuration;

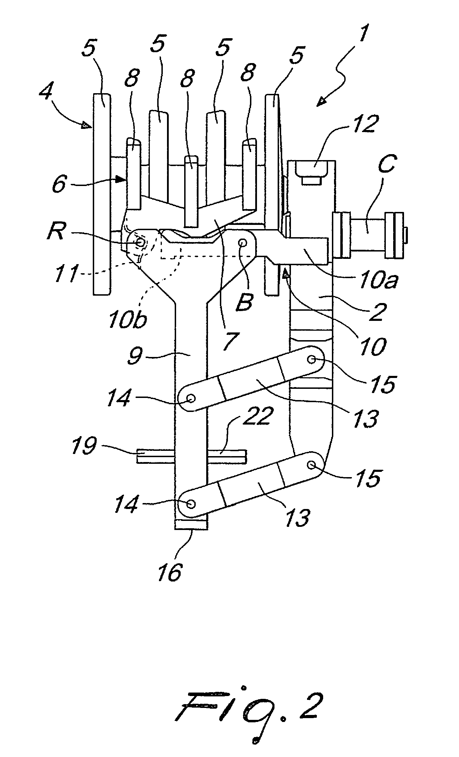

Figure 2 is a front view of one of the devices of Figure 1;

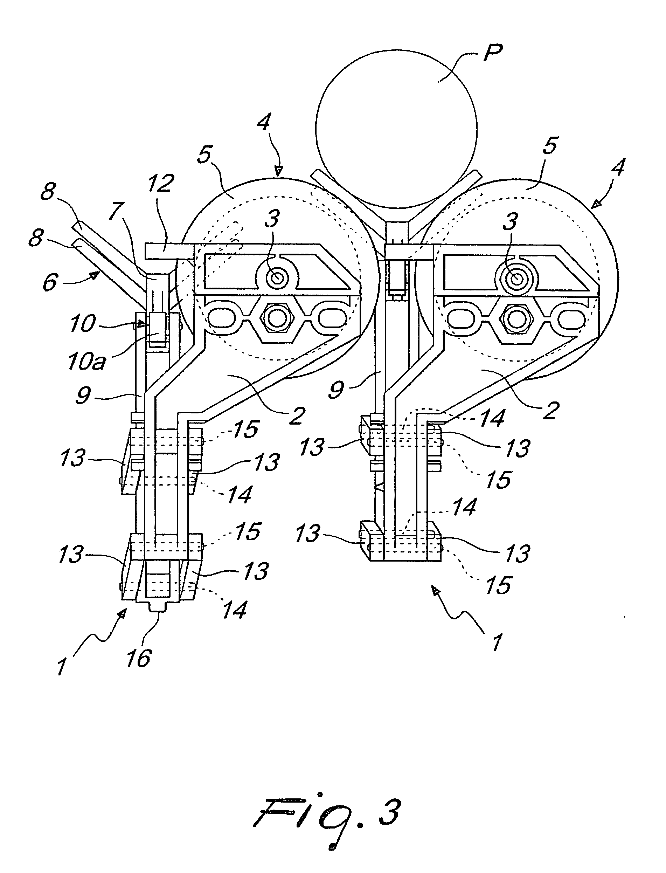

Figure 3 is a side view of the modular devices of Figure 1, in which one of the trays is arranged in the active configuration;

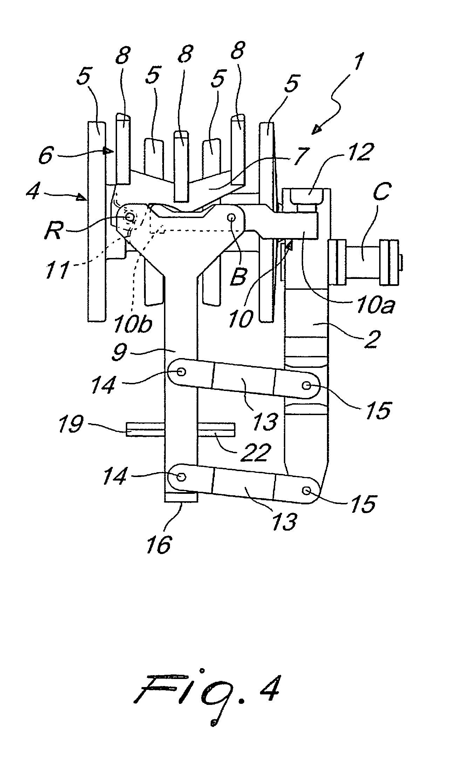

Figure 4 is a front view of the device of Figure 3, with the corresponding tray in the active configuration;

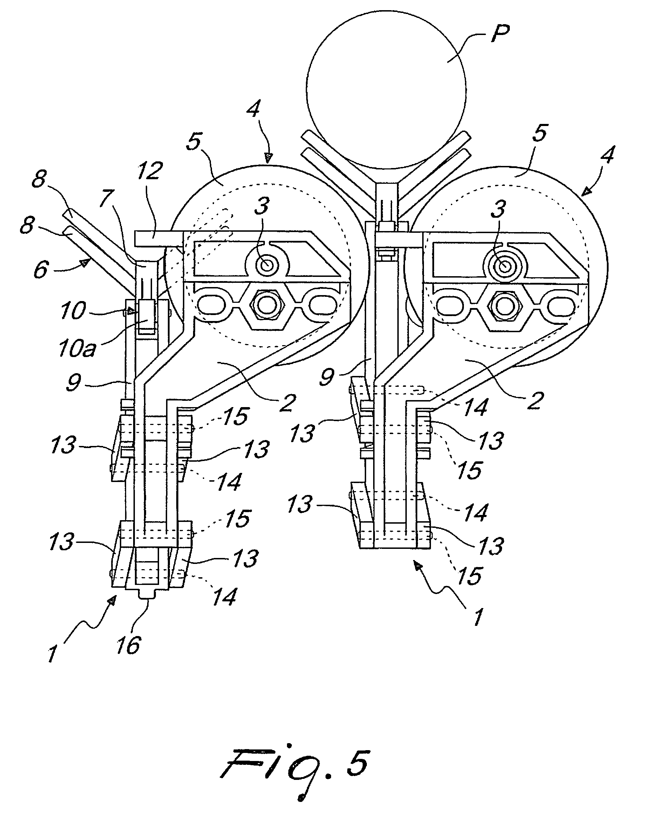

Figure 5 is a side view of the modular devices of Figure 1, in which one of the trays is arranged in the tipping configuration;

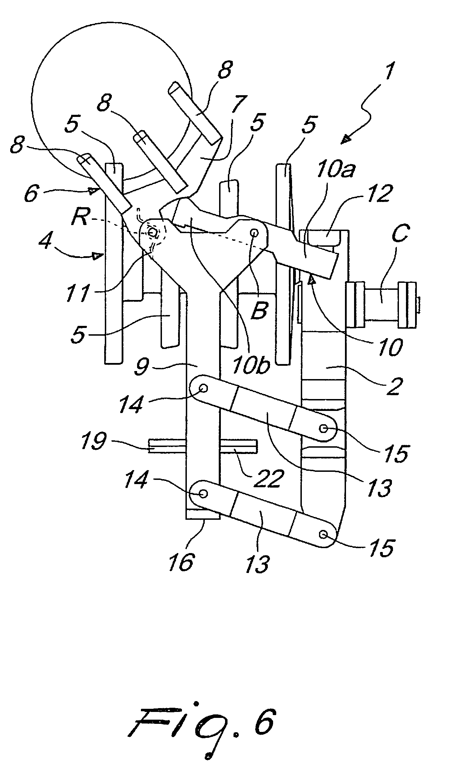

Figure 6 is a front view of the device of Figure 5, with the corresponding tray in the tipping configuration;
Figure 7 is a bottom view of a particular embodiment of the device according to the invention;
Figure 8 is a bottom view of an alternative embodiment of the device according to the invention;

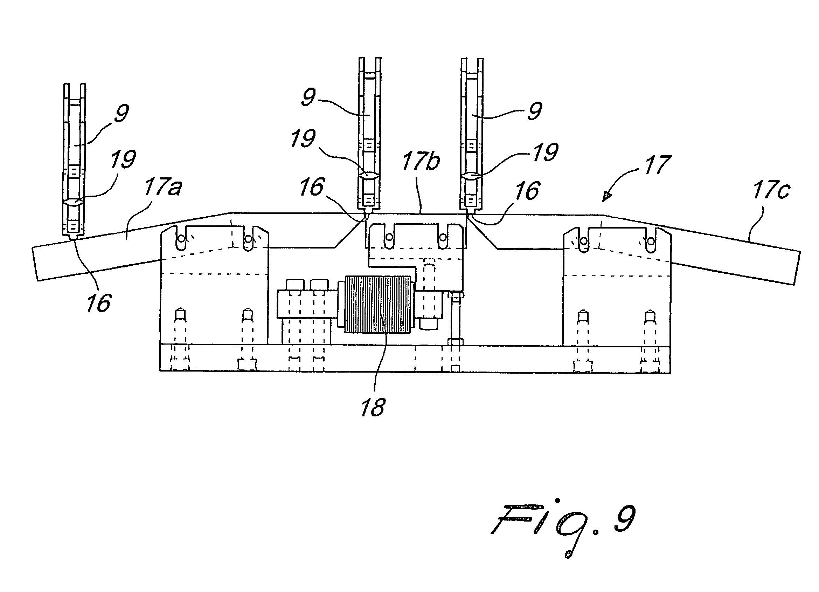

Figure 9 is a side view of a guide for weighing the agricultural products supported by the device according to the invention;

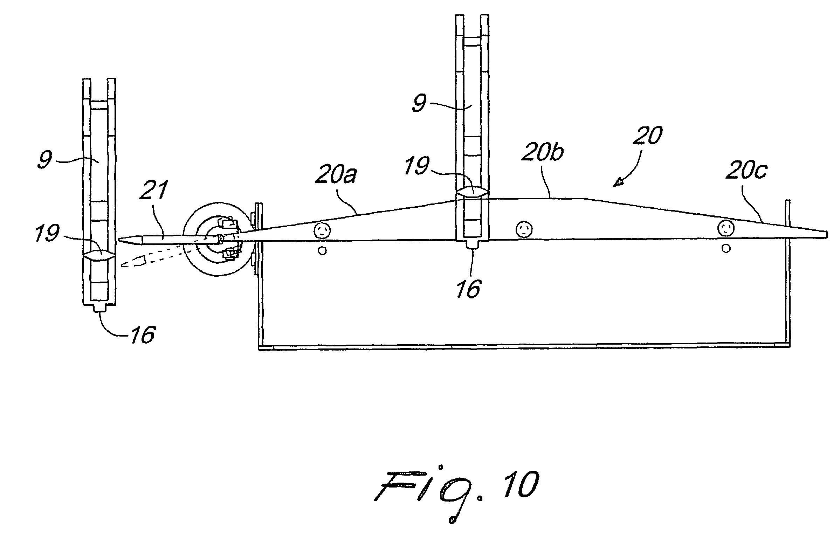

Figure 10 is a side view of a guide for tipping the agricultural products supported by the device according to the invention;
Figure 11 is a side view of two devices according to the invention in a second embodiment, fitted in succession on a grading machine, one device having the tray in the inactive configuration, the other device having the tray in the active configuration;
Figure 12 is a front view of the device of Figure 11 with the corresponding tray in the active configuration.

With reference to the figures, the reference numeral 1 generally designates a modular device for supporting agricultural products on grading machines or the like.

The modular device 1 is provided with a coupling body 2, of the type of a vertical plate on one face of which there are suitable openings, which allow to fix it, by means of screws or the like, to the advancement means of a grading machine; said advancement means are constituted by a conventional chain system C, on which the modular devices 1 are fitted in a closely spaced succession along the measurement and control line of grading machines.

A shaft 3 is associated with the coupling body 2 and protrudes horizontally from the face of the vertical plate 2 that lies opposite the chain C.

A substantially roller-shaped element 4 can rotate on the shaft 3 and is adapted to cooperate with the shaped element 4 of an adjacent modular device 1 in order to support an agricultural product P to be graded.

The shaft 3 is coaxial with respect to the shaped element 4 and determines its axis.

Advantageously, the shaped element 4 is constituted by a plurality of vertical and mutually coaxial disks 5, which are fitted so as to be rigidly coupled and axially spaced with respect to each other on a hub which can rotate snugly about the shaft 3.

The modular device 1 further comprises means for lifting the agricultural product P with respect to the shaped element 4, which are provided with a tray 6 for temporarily supporting the agricultural product P which can move between an inactive configuration, which is substantially lowered with respect to the shaped element 4, and an active configuration, which is substantially raised with respect to said shaped element.

The tray is constituted by a base segment 7, which is substantially parallel to the shaft 3, and by a plurality of segments 8, which are arranged transversely to the base segment 7 and can be inserted between respective pairs of disks 5.

In particular, the tray 6 is arranged to the side of the shaped element 4, so that once the modular devices 1 have been fitted to the chain C, it lies between the shaped element and the shaped element of the adjacent modular device 1.

With the tray 6 in the inactive configuration, therefore, the agricultural product P is arranged so as to rest on the shaped elements 4 of two adjacent modular elements 1, while in the active configuration the tray 6 is raised with respect to said shaped elements, supporting on its own all the weight of the agricultural product P.

The tray 6 is fitted on a supporting element 9, which is associated with the coupling body 2 so that it can perform substantially a translational motion in a vertical direction and supports the tray 6 by interposing means for rotation about a rotation axis R, which is horizontal and perpendicular to the shaft 3.

The rotation means are arranged proximate to the axial end of the shaped element 4 that lies opposite the plate 2, and are such as to allow the rotation of the tray 6 toward the outside of the modular device 1, i.e., on the opposite side with respect to the chain C.

The tray 6 can be made to turn about the rotation axis R by way of tipping means, which are adapted to move said tray between the active configuration and a tipping configuration which is suitable to make the agricultural product P fall from the tray 6.

The tipping means comprise a mechanism 10 for converting the translational motion of the supporting element 9 into a rotary motion of the tray 6 about the rotation axis R, said mechanism acting when a preset height is reached by the supporting element 9.

The stroke for upward translational motion of the supporting element 9 is therefore divided into a first portion, which is adapted to lift the tray 6 with respect to the shaped element 4, and into a second portion, which is adapted to tip the tray 6.

Advantageously, means 11 for the elastic return of the tray 6 from the tipping configuration to the active configuration are provided and are constituted for example by a cylindrical helical flexing spring, which is wound around the rotation axis R and the ends of which are arranged in abutment against the tray 6 and against the supporting element 9.

The conversion mechanism 10 acts in contrast with the resistance of the spring 11 and in particular is of the type of a first-class lever and is constituted by a lever provided with a central portion which is pivoted to the supporting element 9 about an oscillation axis B which is horizontal and parallel with respect to the rotation axis R.

Such oscillation axis is arranged proximate to the axial end of the shaped element 4 that is adjacent to the vertical plate 2.

The lever 10 is elongated in a direction which, during the movement of the supporting element 9 between the inactive configuration and the active configuration, remains substantially horizontal.

A first end 10a of the lever 10 protrudes from the supporting element 9 and, in the tipping configuration, is adapted to come into contact with a horizontal abutment wall 12, which is associated with the top of the vertical plate 2, causing the oscillation of the lever 10 about the oscillation axis B.

A second end 10b of the lever 10, which lies opposite the first end, is instead arranged below the tray 6 and, in the tipping configuration, is adapted to push against said tray so as to turn it about the rotation axis R in contrast with the action of the spring 11.

Conveniently, the supporting element 9 is shaped substantially like a vertical rod, the top of which is provided with a wider portion at which the tray 6 and the lever 10 are mounted so that they can oscillate.

The body of the rod 9 is arranged parallel to the vertical plate 2 and is associated therewith by interposing an articulated-parallelogram mechanism, which is constituted by a pair of mutually parallel linkages 13, each of which is pivoted to the supporting element 9 about a first hinge pivot 14 and to the coupling body 2 about a second hinge pivot 15.

The first hinge pivots 14 and the second hinge pivots 15 are both parallel to the rotation axis R of the tray 6 and are perpendicular to the shaft 3.

Both linkages 13 are shaped so as to have a portion which is oblique with respect to the plane that is perpendicular to the hinge pivots 14 and 15; owing to this configuration, the first hinge pivots 14 and the second hinge pivots 15 are arranged at different distances with respect to the vertical plane of arrangement of the shaft 3.

The shape of the linkages 13, in practice, is such as to allow two different assembly configurations of the modular device 1 as a function of the diametrical size of the shaped element 4.

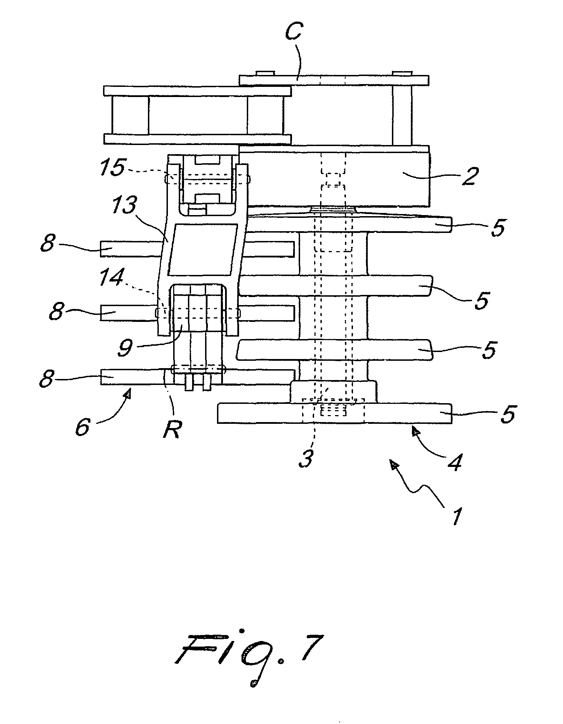

When the diameter of the disks 5 is particularly large, as shown in Figure 7, the linkages 13 are fitted so that the distance of the first hinge pivots 14 from the vertical plane of arrangement of the shaft 3 is greater than the distance of the second hinge pivots 15 from said plane, keeping the supporting element 9 proximate to the shaped element 4.

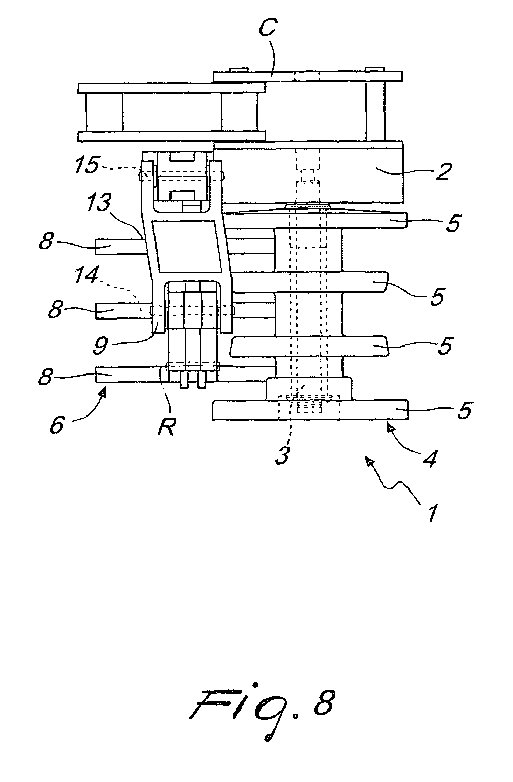

If instead the shaped element 4 has modest diametrical dimensions (Figure 8), the linkages 13 are fitted so that the distance of the first hinge pivots 14 from the vertical plane of arrangement of the shaft 3 is shorter than the distance of the second hinge pivots 15; in this configuration, in practice, it is possible to compensate the smaller size of the shaped element 4 by moving the supporting element 9 closer to said plane of arrangement.

The supporting element 9 is provided with a first surface 16, which is substantially horizontal and is adapted to slide on a first guide 17, which is arranged along the chain C of the grading machine.

The first guide is divided into a first ascending ramp 17a, which is adapted to allow the upward translational motion of the supporting element 9 and the transfer of the tray 6 from the inactive configuration to the active configuration, on a first horizontal plane 17b, which is associated with means 18 for detecting the weight of the agricultural product P that rests on the tray 6 in the active configuration, and a first descending ramp 17c, by following which the supporting element 9 can perform a downward translational motion so as to make the tray 6 return to the inactive configuration.

The supporting element 9 is further provided with a second surface 19, which is substantially horizontal and is adapted to slide on a second guide 20, which is arranged along the chain C and is associated with means for collecting the agricultural products P tipped by the trays 6 of the modular devices 1; the collecting means are not shown in detail in the figures.

In particular, the second guide 20 is provided with a second ascending ramp 20a, which allows the upward translational motion of the supporting element 9 and the transfer of the tray 6 from the inactive configuration to the tipping configuration, and with a second horizontal surface 20b and a second descending ramp 20c; after traveling over said surface and ramp, the supporting element 9 and the tray 6 return to the initial position.

The initial part of the second ascending ramp 20a is constituted by a tab 21, which can rotate on command in order to force selectively the engagement or disengagement of the second guide 20 on the part of the supporting elements 9 of the modular devices 1 that advance along the chain C.

Advantageously, the first and second surfaces 16 and 19 are mutually distinct; the first surface 16 is in fact constituted by the lower end of the supporting element 9, while the second surface 19 is formed by a wing, which protrudes from the supporting element 9 parallel to the shaft 3 and on the opposite side with respect to the plate 2.

Preferably, the supporting element 9 is symmetrical with respect to a vertical plane which is perpendicular to the shaft 3 and is provided with an additional wing 22, which is symmetrical with respect to the wing 19; this particular configuration facilitates considerably the step for assembly of the modular device 1, by way of the fact that the supporting element 9 has two opposite sides which are substantially mutually identical and can equally be directed toward the vertical plate 2 and outward respectively.

The particularity of having a first surface 16 and a second surface 19 that are mutually distinct allows to assign the first surface 16 exclusively to the weighing operations, allowing to provide uniform wear due to friction of the first surface 16 and of the first guide 17, and to avoid phenomena of uneven wear from hindering the sliding of the supporting element 9 on the first guide 17 and affecting the measurement of the weight of the agricultural products P; however, alternative embodiments are also possible in which the first surface 16 and the second surface 19 mutually coincide and, for example, are both formed by the lower end of the shaped element 9 or by a wing such as the one described.

It should be noted that the particular solution of using an articulated-parallelogram mechanism provided with hinge pivots which are perpendicular to the axis of the shaped roller element and with oblique linkages further allows to adapt the present invention to the various kinds of agricultural product without requiring several components of different formats, therefore limiting the overall production costs and the costs for spare part management.

However, alternative embodiments of the invention are also possible.

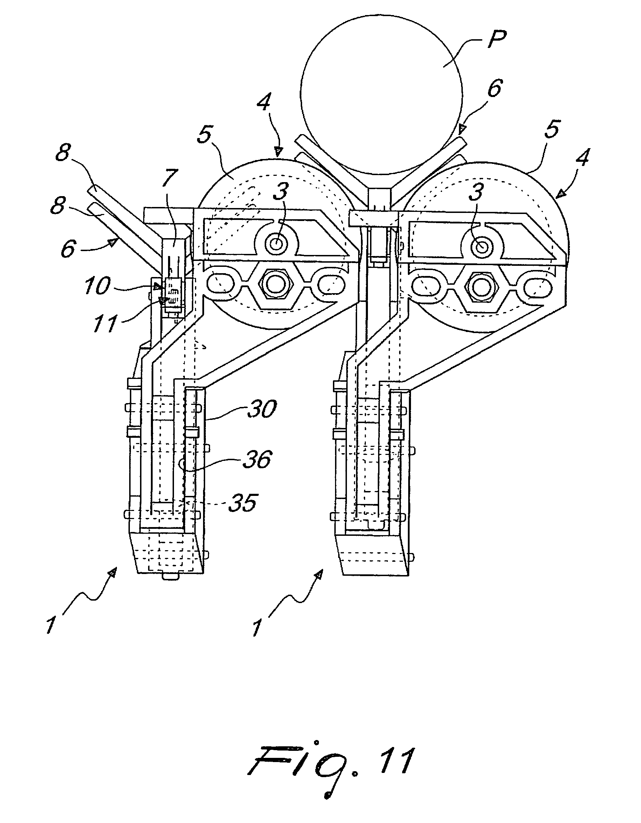

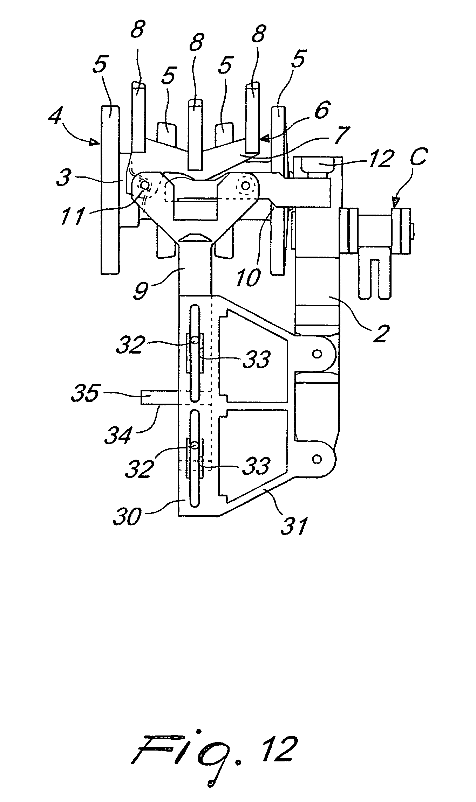

In a second embodiment, shown in Figures 11 and 12, for example, the translational motion of the tray 6 and of the corresponding supporting element 9 with respect to the coupling body 2 is obtained by introducing a sliding coupling such as a side-fit coupling.

The device 1 in fact has a guiding element 30, which is substantially hollow and elongated at right angles to the extension of the shaft 3 and is rigidly associated with the coupling body 2 by interposing a frame 31.

Preferably, the guiding element 30 has a substantially C-shaped transverse cross-section and is arranged with the open side directed toward the opposite side with respect to the coupling body 2.

The supporting element 9 is slidingly associated with the guiding element 30 and is preferably arranged inside said element.

Preferably, in order to reduce friction in the relative sliding between the guiding element 30 and the supporting element 9 and therefore increase the precision of any weighing of the agricultural products P, the two elements are mated with play and there are at least two pins 32, which protrude from the supporting element 9 and are inserted slidingly in corresponding slots formed in the guiding element 30.

The pins 32 protrude from one or more faces of the supporting element 9.

In this case, the supporting element 9 is provided with a single surface 34, which is adapted to slide on appropriately provided guides, of the type described above, which act as a cam in order to actuate the movement of the tray between the inactive configuration and the active configuration and optionally from the active configuration to the tipping configuration.

The surface 34 is formed by a wing 35, which is arranged substantially at right angles to the longitudinal extension of the supporting element 9 and protrudes from said element on the opposite side with respect to the frame 31.

The wing 35 therefore slides at the open side of the guiding element 30. Alternatively, the guiding element 30 can be provided with a longitudinal slot for the sliding of the wing 35.

In practice it has been found that the described invention achieves the proposed aim and objects, and in particular the fact is stressed that the tipping means provided by the present invention allow to unload the agricultural products simply and functionally by lifting the supporting element and without requiring the intervention of external means as in the case of traditional modular devices.

The invention thus conceived is susceptible of numerous modifications and variations, all of which are within the scope of the appended claims.

In practice, the materials used, as well as the contingent shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A modular device (1) for supporting agricultural products (P) on grading machines or the like, comprising at least one body (2) for coupling to the advancement means (C) of a grading machine or the like, at least one element (4) which is shaped substantially like a roller with a substantially horizontal axis, is associated with said coupling body (2) and is adapted to support at least one agricultural product (P) to be graded, means for lifting said agricultural product with respect to said roller-shaped element (4), which are provided with at least one tray (6) for the temporary support of said agricultural product (P), which can move between a substantially lowered inactive configuration and an active configuration which is substantially raised with respect to said roller-shaped element (4), with at least one element (9) for supporting said tray (6), which is associated with said coupling body (2) so that it can substantially perform a translational motion in a vertical direction, and with means for rotation about a horizontal rotation axis (R), which is substantially perpendicular to the axis of said roller-shaped element (4), said means being interposed between said tray (6) and said supporting element (9), and means for tipping the tray (6) about said rotation axis (R), which are adapted to move the tray (6) between said active configuration and a configuration for tipping said agricultural product (P) from the tray, **characterized in that** said tipping means comprise at least one first-class lever mechanism (10) for converting the upward translational motion of said supporting element (9) into a rotary motion of said ray (6) about said rotation axis (R) when a preset height is reached by said supporting element (9), the stroke of the supporting element (9) being divided into a first portion, which is adapted to upwardly lift the tray (6) with respect to the roller-shaped element (4), and a second portion, which is adapted to tip the tray (6).

2. The device according to claim 1, **characterized in that** said tipping means comprise means (11) for the elastic return of said tray (6) from said tipping configuration to said active configuration.

3. The device according to claim 2, **characterized in that** said elastic return means comprise at least one cylindrical helical flexing spring (11), which is wound around said rotation axis (R), its ends being arranged in abutment against said tray (6) and against said supporting element (9).

4. The device according to any one of the preceding claims, **characterized in that** said conversion mechanism comprises at least one lever (10) which is provided with a substantially central portion pivoted to said supporting element (9) about a substantially horizontal oscillation axis (B), with a first end (10a) which, in said tipping configuration, is adapted to be placed in contact against an abutment wall (12) associated with said coupling body (2), and with a second end (10b) which is arranged opposite the first end (10a) and, in said tipping configuration, is adapted to push against said tray (6) so as to turn it about said rotation axis (R).

5. The device according to claim 4, **characterized in that** said oscillation axis (B) is substantially parallel to said rotation axis (R).

6. The device according to any one of the preceding claims, **characterized in that** said supporting element (9) is substantially shaped like a vertical rod.

7. The device according to any one of the preceding claims, **characterized in that** said supporting element (9) is associated with said coupling body (2) by interposing an articulated-parallelogram mechanism.

8. The device according to claim 7, **characterized in that** said articulated-parallelogram mechanism comprises two linkages (13), which are substantially mutually parallel and are both pivoted to said supporting element (9) and to said coupling body (2) about hinge pivots (14,15) which are substantially parallel to said rotation axis (R).

9. The device according to any one of claims 1 to 6, **characterized in that** said supporting element (9) is associated with said coupling body (2) by means of a sliding coupling such as a side-fit coupling.

10. The device according to claim 9, **characterized in that** it comprises a guiding element (30) for the sliding of said supporting element (9) which is rigidly associated with said coupling body (2).

11. The device according to claim 8, **characterized in that** said linkages (13) comprise at least one portion which is substantially oblique with respect to the plane that is perpendicular to said hinge pivots (14,15), the hinge pivots (14,15) associated with said supporting element (9) and the hinge pivots (14,15) associated with said body (2) being arranged at different distances with respect to the vertical plane of arrangement of the axis of said roller-shaped element (4).

12. The device according to any one of the preceding claims, **characterized in that** said roller-shaped element (4) is associated with said coupling body (2) so that it can rotate about its own axis (3).

13. The device according to any one of the preceding claims, **characterized in that** said roller-shaped element (4) is constituted by a plurality of substantially vertical and coaxial disks (5), which are substantially spaced with respect to each other.

14. The device according to claim 13, **characterized in that** said tray (6) comprises at least one base segment (7), which is substantially parallel to the axis of said roller-shaped element (4), and a plurality of segments (8) which are arranged transversely to said base segment (7) and can be inserted between respective pairs of said disks (5).

15. The device according to any one of the preceding claims, **characterized in that** said supporting element (9) comprises at least one first substantially horizontal surface (16), which is adapted to slide on at least one first guide (17), which is arranged along said advancement means (C) and is provided with at least one first ascending ramp (17a), which is adapted for the transfer of said tray (6) from said inactive configuration to said active configuration.

16. The device according to claim 15, **characterized in that** said first guide (17) is associated with means (18) for detecting the weight of said agricultural product (P).

17. The device according to claim 16, **characterized in that** said supporting element (9) comprises at least one second substantially horizontal surface (19), which is adapted to slide on at least one second guide (20), which is arranged along said advancement means (C) and is provided with at least one second ascending ramp (20a), which is adapted for the transition of said tray (6) from said inactive configuration to said tipping configuration.

18. The device according to claim 17, **characterized in that** said second guide (20) is associated with means for collecting said agricultural products tipped from said tray.

19. The device according to claim 17, **characterized in that** said first and second surfaces (16,19) are mutually distinct.

20. The device according to claim 17, **characterized in that** said first and second (16,19) surfaces mutually coincide.

21. The device according to claim 19, **characterized in that** said first surface (16) is constituted by the lower end of said supporting element (9).

22. The device according to claim 21, **characterized in that** said second surface (11) is formed by at least one wing, which protrudes from said supporting element (9) and is substantially parallel to the axis of said roller-shaped element (4).

23. The device according to any one of the preceding claims, **characterized in that** said supporting element (9) is substantially symmetrical with respect to a vertical plane that is perpendicular to the axis of said roller-shaped element (4).

## Patentansprüche

1. Eine modulare Vorrichtung (1) zum Tragen landwirtschaftlicher Produkte (P) auf Sortiermaschinen oder dergleichen, die Folgendes umfasst: mindestens einen Körper (2) zur Kopplung mit dem Vorschubmittel (C) einer Sortiermaschine oder dergleichen, mindestens ein Element (4), das im Wesentlichen wie eine Walze mit einer im Wesentlichen horizontalen Achse geformt ist, mit dem Kopplungskörper (2) verbunden und ausgebildet ist, um mindestens ein zu sortierendes landwirtschattliches Produkt (P) zu tragen, Mittel zum Anheben des landwirtschaftlichen Produkts in Bezug zu dem walzenförmigen Element (4), die mit mindestens einem Tablett (6) zum vorübergehenden Tragen des landwirtschaftlichen Produkts (P) ausgestattet sind und sich zwischen einer im Wesentlichen abgesenkten inaktiven Anordnung und einer aktiven Anordnung bewegen können, die im Wesentlichen erhöht in Bezug zu dem walzenförmigen Element (4) ist, mit mindestens einem Element (9) zum Tragen des Tabletts (6), das so mit dem Kopplungskörper (2) verbunden ist, das es im Wesentlichen eine translatorische Bewegung in eine vertikale Richtung durchführen kann, und mit Mitteln zur Drehung um eine horizontale Drehachse (R), die im Wesentlichen senkrecht zur Achse des walzenförmigen Elements (4) ist, wobei die Mittel zwischen dem Tablett (6) und dem tragenden Element (9) angeordnet sind, und Mittel zum Kippen des Tabletts (6) um die Drehachse (R), die ausgebildet sind, um das Tablett (6) zwischen der aktiven Anordnung und einer Anordnung zum Kippen des landwirtschaftlichen Produkts (P) aus dem Tablett zu bewegen, **dadurch gekennzeichnet, dass** die Kippmittel mindestens einen Hebelmechanismus erster Klasse (10) umfassen, um die translatorische Bewegung nach aufwärts des tragenden Elements (9) in eine Drehbewegung des Tabletts (6) um die Drehachse (R) umzuwandeln, wenn von dem tragenden Element (9) eine voreingestellte Höhe erreicht wird, wobei der Hub des tragenden Elements (9) in einen ersten Abschnitt, der ausgebildet ist, um das Tablett (6) in Bezug zu dem walzenförmigen Element (4) zu heben, und einen zweiten Abschnitt unterteilt ist, der ausgebildet ist, um das Tablett (6) zu kippen.

2. Die Vorrichtung gemäß Anspruch 1, **dadurch gekennzeichnet, dass** die Kippmittel Mittel (11) zur elastischen Rückstellung des Tabletts (6) aus der Kippanordnung in die aktive Anordnung umfassen.

3. Die Vorrichtung gemäß Anspruch 2, **dadurch gekennzeichnet, dass** die elastischen Rückstellmittel mindestens eine zylindrische biegsame Schraubenfeder (11) umfassen, die um die Drehachse (R) gewunden wird, wobei ihre Enden gegen das Tablett (6) und gegen das tragende Element (9) anstoßen.

4. Die Vorrichtung gemäß einem beliebigen der obigen Ansprüche, **dadurch gekennzeichnet, dass** der Umwandlungsmechanismus mindestens einen Hebel (10) umfasst, der mit einem im Wesentlichen zentralen Abschnitt versehen ist, welcher um eine im Wesentlichen horizontale Schwingachse (B) gelenkig mit dem tragenden Element (9) verbunden ist, mit einem ersten Ende (10a), das in der Kippanordnung ausgebildet ist, um eine Widerlagerwand (12) zu berühren, die mit dem Kopplungskörper (2) verbunden ist, und mit einem zweiten Ende (10b), das gegenüber dem ersten Ende (10a) angeordnet ist und in der Kippanordnung ausgebildet ist, um so gegen das Tablett (6) zu drücken, dass es um die Drehachse (R) gedreht wird.

5. Die Vorrichtung gemäß Anspruch 4, **dadurch gekennzeichnet, dass** die Schwingachse (B) im Wesentlichen parallel zu der Drehachse (R) ist.

6. Die Vorrichtung gemäß einem beliebigen der obigen Ansprüche, **dadurch gekennzeichnet, dass** das tragende Element (9) im Wesentlichen wie ein Vertikalstab geformt ist.

7. Die Vorrichtung gemäß einem beliebigen der obigen Ansprüche, **dadurch gekennzeichnet, dass** das tragende Element (9) mit dem Kopplungskörper (2) durch Zwischenschaltung eines angelenkten Parallelogramm-Mechanismus verbunden wird.

8. Die Vorrichtung gemäß Anspruch 7, **dadurch gekennzeichnet, dass** der angelenkte Parallelogramm-Mechanismus zwei Verbindungsglieder (13) umfasst, die zueinander parallel sind und beide um Drehzapfen (14, 15), die im Wesentlichen parallel zu der Drehachse (R) sind, gelenkig mit dem tragenden Element (9) und mit dem Kopplungskörper (2) verbunden sind.

9. Die Vorrichtung gemäß einem beliebigen der Ansprüche 1 bis 6, **dadurch gekennzeichnet, dass** das tragende Element (9) mit dem Kopplungskörper (2) durch eine Schiebekupplung, wie zum Beispiel eine Side-Fit-Kupplung, verbunden ist.

10. Die Vorrichtung gemäß Anspruch 9, **dadurch gekennzeichnet, dass** sie ein Führungselement (30) zum Gleiten des tragenden Elements (9) umfasst, das starr mit dem Kopplungskörper (2) verbunden ist.

11. Die Vorrichtung gemäß Anspruch 8, **dadurch gekennzeichnet, dass** die Verbindungsglieder (13) mindestens einen Abschnitt umfassen, der im Wesentlichen schräg zu der Ebene ist, die senkrecht zu den Drehzapfen (14, 15) ist, wobei die mit dem tragenden Element (9) verbundenen Drehzapfen (14, 15) und die mit dem Kopplungskörper (2) verbundenen Drehzapfen (14, 15) in verschiedenen Abständen von der vertikalen Anordnungsebene der Achse des walzenförmigen Elements (4) angeordnet sind.

12. Die Vorrichtung gemäß einem beliebigen der obigen Ansprüche, **dadurch gekennzeichnet, dass** das walzenförmige Element (4) mit dem Kopplungskörper (2) so verbunden ist, dass es sich um seine eigene Achse (3) drehen kann.

13. Die Vorrichtung gemäß einem beliebigen der obigen Ansprüche, **dadurch gekennzeichnet, dass** das walzenförmige Element (4) aus einer Vielzahl im Wesentlichen vertikaler und koaxialer Scheiben (5) besteht, die im Wesentlichen voneinander beabstandet sind.

14. Die Vorrichtung gemäß Anspruch 13, **dadurch gekennzeichnet, dass** das Tablett (6) mindestens ein Basis-Segment (7) umfasst, das im Wesentlichen parallel zur Achse des walzenförmigen Elements (4) ist, und eine Vielzahl von Segmenten (8), die transversal zu dem Grundsegment (7) angeordnet sind und zwischen entsprechenden Paaren der Scheiben (5) eingefügt werden können.

15. Die Vorrichtung gemäß einem beliebigen der obigen Ansprüche, **dadurch gekennzeichnet, dass** das tragende Element (9) mindestens eine erste im Wesentlichen horizontale Oberfläche (16) umfasst, die ausgebildet ist, um auf mindestens einer ersten Führung (17) zu gleiten, welche entlang dem Vorschubmittel (C) angeordnet und mit mindestens einer ersten ansteigenden Rampe (17a) versehen ist, welche zur Überführung des Tabletts (6) aus der inaktiven Anordnung in die aktive Anordnung ausgebildet ist.

16. Die Vorrichtung gemäß Anspruch 15, **dadurch gekennzeichnet, dass** die erste Führung (17) mit Mitteln (18) zur Erkennung des Gewichts des landwirtschaftlichen Produkts (P) verbunden ist.

17. Die Vorrichtung gemäß Anspruch 16, **dadurch gekennzeichnet, dass** das tragende Element (9) mindestens eine zweite im Wesentlichen horizontale Oberfläche (19) umfasst, die ausgebildet ist, um auf mindestens einer zweiten Führung (20) zu gleiten, welche entlang dem Vorschubmittel (C) angeordnet ist und mit mindestens einer zweiten ansteigenden Rampe (20a) ausgestattet ist, die für den Übergang des Tabletts (6) aus der inaktiven Anordnung in die Kippanordnung ausgebildet ist.

18. Die Vorrichtung gemäß Anspruch 17, **dadurch gekennzeichnet, dass** die zweite Führung (20) mit Mitteln zum Sammeln der landwirtschaftlichen Produkte verbunden ist, die von dem Tablett gekippt werden.

19. Die Vorrichtung gemäß Anspruch 17, **dadurch gekennzeichnet, dass** die erste und die zweite Oberfläche (16, 19) voneinander getrennt sind.

20. Die Vorrichtung gemäß Anspruch 17, **dadurch gekennzeichnet, dass** die erste und die zweite Oberfläche (16, 19) zusammenfallen.

21. Die Vorrichtung gemäß Anspruch 19, **dadurch gekennzeichnet, dass** die erste Oberfläche (16) aus dem unteren Ende des tragenden Elements (9) besteht.

22. Die Vorrichtung gemäß Anspruch 21, **dadurch gekennzeichnet, dass** die zweite Oberfläche (11) von mindestens einem Flügel gebildet wird, der aus dem tragenden Element (9) herausragt und im Wesentlichen parallel zur Achse des walzenförmigen Elements (4) ist.

23. Die Vorrichtung gemäß einem beliebigen der obigen Ansprüche, **dadurch gekennzeichnet, dass** das tragende Element (9) im Wesentlichen symmetrisch zu einer vertikalen Ebene ist, die senkrecht zur Achse des walzenförmigen Elements (4) ist.

## Revendications

1. Dispositif modulaire (1) pour supporter des produits agricoles (P) sur des machines de tri ou similaires, comprenant au moins un corps (2) pour se coupler à des moyens d'avancement (C) d'une machine de tri ou similaire, au moins un élément (4) qui est formé sensiblement comme un rouleau avec un axe sensiblement horizontal, est associé audit corps de couplage (2) et est adapté pour supporter au moins un produit agricole (P) à trier, des moyens pour soulever ledit produit agricole par rapport audit élément en forme de rouleau (4), qui comportent au moins un plateau (6) pour le support temporaire dudit produit agricole (P), qui peut être déplacé entre une configuration inactive sensiblement abaissée et une configuration active qui est sensiblement levée par rapport audit élément en forme de rouleau (4), avec au moins un élément (9) pour support ledit plateau (6) qui est associé audit corps de couplage (2) de sorte qu'il peut réaliser sensiblement un mouvement de translation dans une direction verticale, et avec des moyens pour la rotation autour d'un axe de rotation horizontal (R) qui est sensiblement perpendiculaire à l'axe dudit élément en forme de rouleau (4), lesdits moyens étant intercalés entre ledit plateau (6) et ledit élément de support (9), et des moyens pour incliner le plateau (6) autour dudit axe de rotation (R), qui sont adaptés pour déplacer le plateau (6) entre ladite configuration active et une configuration pour incliner ledit produit agricole (P) par rapport au plateau, **caractérisé en ce que** lesdits moyens d'inclinaison comprennent au moins un mécanisme de levier de première classe (10) pour transformer le mouvement de translation vers le haut dudit élément de support (9) en un mouvement de rotation dudit plateau (6) autour dudit axe de rotation (R) lorsqu'une hauteur prédéterminée est atteinte par ledit élément de support (9), la course de l'élément de support (9) étant divisée en une première partie, qui est adaptée pour lever le plateau (6) vers le haut par rapport à l'élément en forme de rouleau (4), et une seconde partie qui est adaptée pour incliner le plateau (6).

2. Dispositif selon la revendication 1, **caractérisé en ce que** lesdits moyens d'inclinaison comprennent des moyens (11) pour le retour élastique dudit plateau (6) de ladite configuration d'inclinaison à ladite configuration active.

3. Dispositif selon la revendication 2, **caractérisé en ce que** lesdits moyens de retour élastique comprennent au moins un ressort de flexion hélicoïdal cylindrique (11) qui est enroulé autour dudit axe de rotation (R), ses extrémités étant agencées en butée contre ledit plateau (6) et contre ledit élément de support (9).

4. Dispositif selon l'une quelconque des revendications précédentes, **caractérisé en ce que** ledit mécanisme de conversion comprend au moins un levier (10) qui comporte une partie sensiblement centrale pivotée vers ledit élément de support (9) autour d'un axe d'oscillation sensiblement horizontal (B), avec une première extrémité (10a) qui, dans ladite configuration d'inclinaison, est adaptée pour être placée en contact contre une paroi de butée (12) associée audit corps de couplage (2), et avec une seconde extrémité (10b) qui est agencée à l'opposé de la première extrémité (10a) et, dans ladite configuration d'inclinaison, est adaptée pour pousser contre ledit plateau (6) afin de le faire tourner autour dudit axe de rotation (R).

5. Dispositif selon la revendication 4, **caractérisé en ce que** ledit axe d'oscillation (B) est sensiblement parallèle audit axe de rotation (R).

6. Dispositif selon l'une quelconque des revendications précédentes, **caractérisé en ce que** ledit élément de support (9) est sensiblement formé comme une tige verticale.

7. Dispositif selon l'une quelconque des revendications précédentes, **caractérisé en ce que** ledit élément de support (9) est associé audit corps de couplage (2) en intercalant un mécanisme en forme de parallélogramme articulé.

8. Dispositif selon la revendication 7, **caractérisé en ce que** ledit mécanisme en forme de parallélogramme articulé comprend deux bielles (13), qui sont sensiblement mutuellement parallèles et sont toutes deux pivotées par rapport audit élément de support (9) et audit corps de couplage (2) autour de pivots d'articulation (14, 15) qui sont sensiblement parallèles audit axe de rotation (R).

9. Dispositif selon l'une quelconque des revendications 1 à 6, **caractérisé en ce que** ledit élément de support (9) est associé audit corps de couplage (2) au moyen d'un couplage coulissant tel qu'un couplage à montage latéral.

10. Dispositif selon la revendication 9, **caractérisé en ce qu'**il comprend un élément de guidage (30) pour le coulissement dudit élément de support (9) qui est associé de manière rigide audit corps de couplage (2).

11. Dispositif selon la revendication 8, **caractérisé en ce que** lesdites tringleries (13) comprennent au moins une partie qui est sensiblement oblique par rapport au plan qui est perpendiculaire auxdits pivots d'articulation (14, 15), les pivots d'articulation (14, 15) associés audit élément de support (9) et les pivots d'articulation (14, 15) associés audit corps de couplage (2) étant agencés à des distances différentes par rapport au plan vertical d'agencement de l'axe dudit élément en forme de rouleau (4).

12. Dispositif selon l'une quelconque des revendications précédentes, **caractérisé en ce que** ledit élément en forme de rouleau (4) est associé audit corps de couplage (2) de sorte qu'il peut tourner autour de son propre axe (3).

13. Dispositif selon l'une quelconque des revendications précédentes, **caractérisé en ce que** ledit élément en forme de rouleau (4) est constitué par une pluralité de disques sensiblement verticaux et coaxiaux (5), qui sont sensiblement espacés les uns par rapport aux autres.

14. Dispositif selon la revendication 13, **caractérisé en ce que** ledit plateau (6) comprend au moins un segment de base (7), qui est sensiblement parallèle à l'axe dudit élément en forme de rouleau (4), et une pluralité de segments (8) qui sont agencés de manière transversale par rapport audit segment de base (7) et peuvent être insérés entre les paires respectives desdits disques (5).

15. Dispositif selon l'une quelconque des revendications précédentes, **caractérisé en ce que** ledit élément de support (9) comprend au moins une première surface sensiblement horizontale (16), qui est adaptée pour coulisser sur au moins un premier guide (17), qui est agencé le long desdits moyens d'avancement (C) et comporte au moins une première rampe d'ascension (17a), qui est adaptée pour le transfert dudit plateau (6) de ladite configuration inactive à ladite configuration active.

16. Dispositif selon la revendication 15, **caractérisé en ce que** ledit premier guide (17) est associé à des moyens (18) pour détecter le poids dudit produit agricole (P).

17. Dispositif selon la revendication 16, **caractérisé en ce que** ledit élément de support (9) comprend au moins une seconde surface sensiblement horizontale (19) qui est adaptée pour coulisser sur au moins un second guide (20), qui est agencé le long desdits moyens d'avancement (C) et comporte au moins une seconde rampe d'ascension (20a) qui est adaptée pour la transition dudit plateau (6) de ladite configuration inactive à ladite configuration d'inclinaison.

18. Dispositif selon la revendication 17, **caractérisé en ce que** ledit second guide (20) est associé à des moyens pour collecter lesdits produits agricoles inclinés par rapport audit plateau.

19. Dispositif selon la revendication 17, **caractérisé en ce que** lesdites première et seconde surfaces (16, 19) sont mutuellement distinctes.

20. Dispositif selon la revendication 17, **caractérisé en ce que** lesdites première et seconde (16, 19) surfaces coïncident mutuellement.

21. Dispositif selon la revendication 19, **caractérisé en ce que** ladite première surface (16) est constituée par l'extrémité inférieure dudit élément de support (9).

22. Dispositif selon la revendication 21, **caractérisé en ce que** ladite seconde surface (11) est formée par au moins une aile, qui fait saillie par rapport audit élément de support (9) et est sensiblement parallèle à l'axe dudit élément en forme de rouleau (4).

23. Dispositif selon l'une quelconque des revendications précédentes, **caractérisé en ce que** ledit élément de support (9) est sensiblement symétrique par rapport à un plan vertical qui est perpendiculaire à l'axe dudit élément en forme de rouleau (4).
